# EUROPEAN PATENT SPECIFICATION

(11) **EP 4 441 578 B1**
(45) Date of publication and mention of the grant of the patent: **06.08.2025**
(21) Application number: 24706176.5
(22) Date of filing: 07.02.2024
(51) Int. Cl.: G06F 16/957

(54) **METHODS OF SEARCHING, SYSTEMS AND DEVICES**
SUCHVERFAHREN, SYSTEME UND VORRICHTUNGEN
PROCÉDÉS DE RECHERCHE, SYSTÈMES ET DISPOSITIFS

(30) Priority: 21.02.2023 GB 202302429; 27.11.2023 GB 202318073
(43) Date of publication of application: 09.10.2024
(62) Divisional of application: 24205564.8
(73) Proprietor: Skyscanner Technology Limited, London W1D 4AL (GB)
(72) Inventor: YANG, Viktor, London W1D 4AL (GB); HUANG, Jason, London W1D 4AL (GB)
(74) Representative: Langley, Peter James
(86) International application number: PCT/GB2024/050333
(87) International publication number: WO 2024/175882

(56) References cited:
- ZSOMBOR FUSZENECKER: "From itineraries to widgets", 26 May 2017 (2017-05-26), pages 1 - 23, XP093152894, Retrieved from the Internet <URL:https://medium.com/@SkyscannerEng/from-itineraries-to-widgets-9b89ca72fda4> [retrieved on 20240417]

## Description

### BACKGROUND OF THE INVENTION

### 1. Field of the Invention

The field of the invention relates to computer-implemented methods of searching for search results using a browser executing on a client device, to related systems including servers and the client device including a browser program, to related client devices including a browser program, and to related servers forming part of the system.

### 2. Technical Background

Time To First Result (TTFR) is a very important metric for the search performance of a search website. This is the time taken for the first search result to be displayed in the user interface of the user who has requested the search. If the first search result does not appear quickly, the user may switch to another search website.

With more and more search activities being performed by users of the internet, ever more energy is being used to perform search activities on the internet. It is desirable to reduce, or to limit, the energy usage in respect of performing search activities on the internet.

A portion of the disclosure of this patent document contains material, which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### 3. Discussion of Related Art

EP3557437A1 and EP3557437B1 disclose a case management system which is configured to generate search templates based on selection of a search type and one or more data sources. As configured, the case management system enables execution of searches using the generated search template on synchronous and asynchronous data sources and provides periodic polling of the asynchronous data sources to generate consolidated search results.

Zsombor Fuszenecker: "From itineraries to widgets", 26 May 2017, pages 1-23, XP093152894, discloses a dynamic search results page.

### SUMMARY OF THE INVENTION

According to a first aspect of the invention, there is provided a computer-implemented method of searching for search results using a browser executing on a client device, a search home website, a back-end for front-end (BFF) server, and a search service server, the method including the steps of:
(i) the browser executing on the client device sending a search request to the search home website, the search request including search parameters;
(ii) the search home website sending an asynchronous pre-search request to the search service server, the asynchronous pre-search request including the search parameters, and the search service server initiating a search cycle using the search parameters in response to the asynchronous pre-search request;
(iii) the browser receiving from the search home website HTML data including a Cascading Style Sheets (CSS) and script tag;
(iv) the browser executing the CSS and script tag to download CSS and script files from a front end server;
(v) the browser parsing the CSS files to render a web page component including a web page style;
(vi) the browser executing the script files such that the client device including the browser establishes a persistent connection to the back-end for front-end (BFF) server, and sends the search parameters to the BFF server, the BFF server polling the search service server using the search parameters;
(vii) the search service server recognizing that the search parameters it received in step (vi) correspond to the search parameters it received in step (ii), to use the search cycle initiated in step (ii) to provide first search results from the search cycle to the BFF server, in response to the polling from the BFF server;
(viii) the BFF server sending the first search results to the browser executing on the client computer, and
(ix) the browser providing the first search results for display on a screen of the client device.

An advantage is that the browser receives a first search result more quickly as a result of the search home website sending an asynchronous pre-search request to the search service server, the asynchronous pre-search request including the search parameters, and the search service server initiating a search cycle using the search parameters in response to the asynchronous pre-search request. An advantage is that energy use is reduced, because as a result of the search home website sending an asynchronous pre-search request to the search service server, the asynchronous pre-search request including the search parameters, and the search service server initiating a search cycle using the search parameters in response to the asynchronous pre-search request, fewer polling requests from the BFF server to the search service are required, which reduces energy usage.

The method may be one wherein the search request is a search request for hotel reservations.

The method may be one wherein the search request is a search request for flights, or for rental vehicles (e.g. cars, automobiles, vans, trucks, boats, ships, aircraft, motorbikes), or for home loans, or for insurance (e.g. car insurance, home insurance, travel insurance, life insurance, pet insurance), or for money loans, or for mortgage loans, or for mobile phone purchase, or for broadband deals, or for real estate, or for rental accommodation, or for dating.

The method may be one wherein the client device is a desktop computer, a laptop computer, an internet TV, a smartphone, or a tablet computer.

The method may be one wherein the client device is in wireless (e.g. cellular or WiFi) connection with the internet.

The method may be one wherein the client device is in wired connection with the internet.

The method may be one wherein the front end server is a cloud server.

The method may be one wherein the front end server is a content delivery network (CDN), e.g. a static files server.

The method may be one wherein the BFF server is used to provide language translation, to translate the results received from the search service server in a first language, into a second language, to send the results in the second language to the browser executing in the client device.

The method may be one wherein the BFF server polls the search service server at intervals to request the Search Service server to send data relating to the asynchronous pre-search request that was sent to the Search Service server. An advantage is that energy use is reduced, because as a result of the search home website sending an asynchronous pre-search request to the search service server, the asynchronous pre-search request including the search parameters, and the search service server initiating a search cycle using the search parameters in response to the asynchronous pre-search request, fewer polling requests from the BFF server to the search service are required, which reduces energy usage.

The method may be one wherein the BFF server polls the search service server at intervals to request the Search Service server to send data relating to the asynchronous pre-search request that was sent to the Search Service server, until all the search results are received and sent to the client device including the browser, and rendered at the browser, and then the client device including the browser closes the persistent connection. An advantage is that energy use is reduced, because as a result of the search home website sending an asynchronous pre-search request to the search service server, the asynchronous pre-search request including the search parameters, and the search service server initiating a search cycle using the search parameters in response to the asynchronous pre-search request, fewer polling requests from the BFF server to the search service are required, which reduces energy usage.

The method may be one wherein the search cycle includes the Search Service server using external services to retrieve search data relating to search results.

The method may be one wherein the search home website checks that the search request has not come from a bot, and if it is determined that the search request appears not to have come from a bot, then the search process is proceeded with. An advantage is that searches determined to have come from a bot are blocked, which reduces energy usage.

The method may be one wherein a gateway associated with the search home website server selects a geographic region from a plurality of geographic regions, and then routes the search request received from the browser to a group of servers in the geographic region, the group of servers including the BFF server and the search service server, the search service website returning an identifier associated with the selected geographic region to the browser, and the browser using the identifier associated with the selected geographic region to enable the gateway to route the search requests received from the browser to the group of servers in the geographic region. An advantage is that calls between groups of servers in different geographic regions are avoided, which reduces energy usage. An advantage is that calls between groups of servers in different geographic regions are avoided, which speeds up the delivery of the first search result to the browser.

The method may be one wherein the browser sets the selected geographic region using a cookie, e.g. a session cookie.

The method may be one wherein when the persistent connection is established for polling to the search service, the request header includes the region obtained from the cookie, e.g. a session cookie.

The method may be one in which first search data (e.g. hotel static info) are provided by the BFF server to the browser executing on a client device, and second search data (e.g. related price info) is only provided afterwards, if the browser executing on client device requests the second search data (e.g. related price info). An advantage is reduced energy usage, because at least sometimes the second search data will not be requested.

The method may be one in which a region identifier is sent from the BFF server to the browser and stored e.g. as a cookie.

The method may be one in which a request from the browser executing on the client device requesting the second search data (e.g. related price info) includes the region identifier that was sent from the BFF server to the browser and stored e.g. as a cookie.

The method may be one in which after the BFF server sends the second data (e.g. hotel price info) to the client device including the browser, the BFF server sends a further region identifier from the BFF server to the browser which is stored at the client device e.g. in a further cookie.

The method may be one in which after a checkout process is requested from the browser to the BFF server, the request includes the further region identifier e.g. from the further cookie, to ensure that the same region is used for the checkout process that was used to provide the second data (e.g. hotel price info).

The method may be one in which a field is included in the pre-search request which is sent to the (e.g. hotel reservation) search service, to indicate that this request is an asynchronous search request, including to start the search cycle.

The method may be one in which the (e.g. hotels) search home website uses javascript, typescript, node javascript and React language and frameworks; the (e.g. hotels) BFF server uses node javascript language and frameworks, and the (e.g. hotel reservation) search service uses python and aiohttp language and frameworks.

The method may be one in which when the browser is fetching the CSS and script files from the Front End server, the browser identifies the client device class (e.g. desktop computer, laptop computer, internet TV, smartphone, tablet computer) to the Front End server, and the browser receives in response from the Front End server a corresponding selected set of CSS and script files, which correspond to the client device class identified by the browser.

The method may be one in which the script files are javascript files.

According to a second aspect of the invention, there is provided a system including a client device including a browser program and a screen, a search home website, a back-end for front-end (BFF) server, and a search service server, wherein
(i) the browser is configured to execute on the client device to send a search request to the search home website, the search request including search parameters;
(ii) the search home website is configured to send an asynchronous pre-search request to the search service server, the asynchronous pre-search request including the search parameters, and the search service server is configured to initiate a search cycle using the search parameters in response to the asynchronous pre-search request;
(iii) the browser is configured to receive from the search home website HTML data including a Cascading Style Sheets (CSS) and script tag;
(iv) the browser is configured to execute the CSS and script tag to download CSS and script files from a front end server;
(v) the browser is configured to parse the CSS files to render a web page component including a web page style;
(vi) the browser is configured to execute the script files, wherein in response to the browser executing the script files the client device including the browser is configured to establish a persistent connection to the back-end for front-end (BFF) server, and to send the search parameters to the BFF server, wherein the BFF server is configured to poll the search service server using the search parameters;
(vii) the search service server is configured to recognize that the search parameters it received in (vi) correspond to the search parameters it received in (ii), to use the search cycle initiated in (ii) to provide first search results from the search cycle to the BFF server, in response to the polling from the BFF server;
(viii) the BFF server is configured to send the first search results to the browser executing on the client device, and
(ix) the browser is configured to provide the first search results for display on the screen of the client device.

An advantage is that the browser receives a first search result more quickly as a result of the search home website sending an asynchronous pre-search request to the search service server, the asynchronous pre-search request including the search parameters, and the search service server initiating a search cycle using the search parameters in response to the asynchronous pre-search request. An advantage is that energy use is reduced, because as a result of the search home website sending an asynchronous pre-search request to the search service server, the asynchronous pre-search request including the search parameters, and the search service server initiating a search cycle using the search parameters in response to the asynchronous pre-search request, fewer polling requests from the BFF server to the search service are required, which reduces energy usage.

The system may be configured to perform a method of any aspect of the first aspect of the invention.

Aspects of the invention may be combined.

### BRIEF DESCRIPTION OF THE FIGURES

Aspects of the invention will now be described, by way of example(s), with reference to the following Figures, in which:
**Figure 1** shows an example of a system including a client computer device including a browser, a search home website, a front end in the Cloud, a search back-end for front-end (BFF) server, and a search service server, which are in connection with the internet.
**Figure 2** shows an example of a system including a client computer device including a browser, a hotels search home website, a front end in the Cloud, a hotels search back-end for front-end (BFF) server, and a hotel reservation search service server, which are in connection with the internet.
**Figure 3** shows an example method or system for reducing the Time To First Result (TTFR).
**Figure 4** shows an example method or system for reducing the Time To First Result (TTFR), including example timings.
**Figure 5** shows an example method or system for reducing the Time To First Result (TTFR), in a multi-region environment.
**Figure 6** shows an example method or system for reducing the Time To First Result (TTFR), in a multi-region environment, in which hotel search results are provided, but in which hotel price information is not provided, unless the hotel price information is specifically requested.
**Figure 7** shows an example of hotel search results presented in a browser user interface on a desktop computer, in which the hotel search results include prices.
**Figure 8** shows an example of hotel search results presented in a browser user interface on a smartphone, in which the hotel search results include prices.

### DETAILED DESCRIPTION

A goal is to improve search performance for a search website, e.g. a search website for searching for hotel reservations.

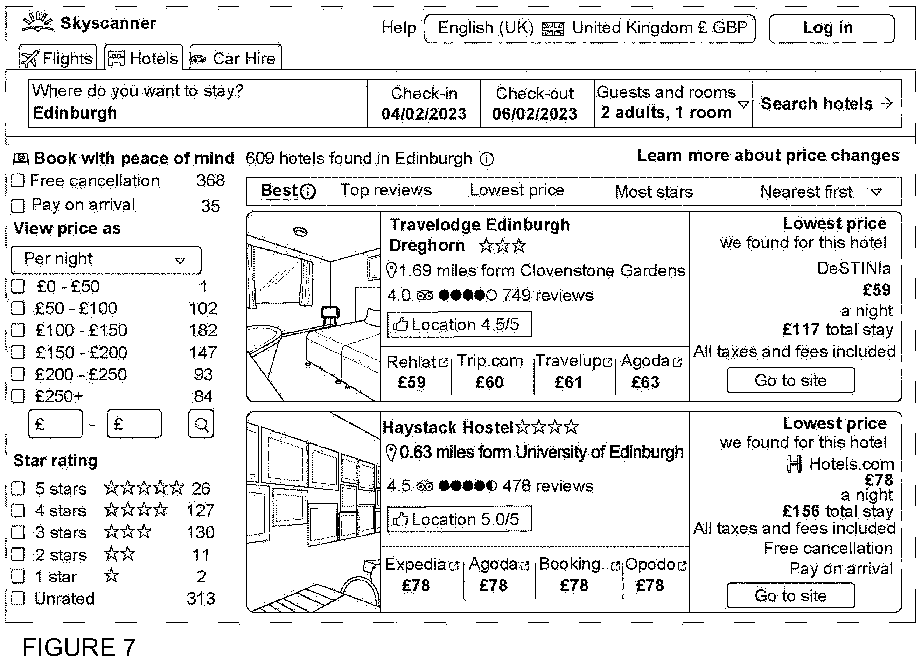

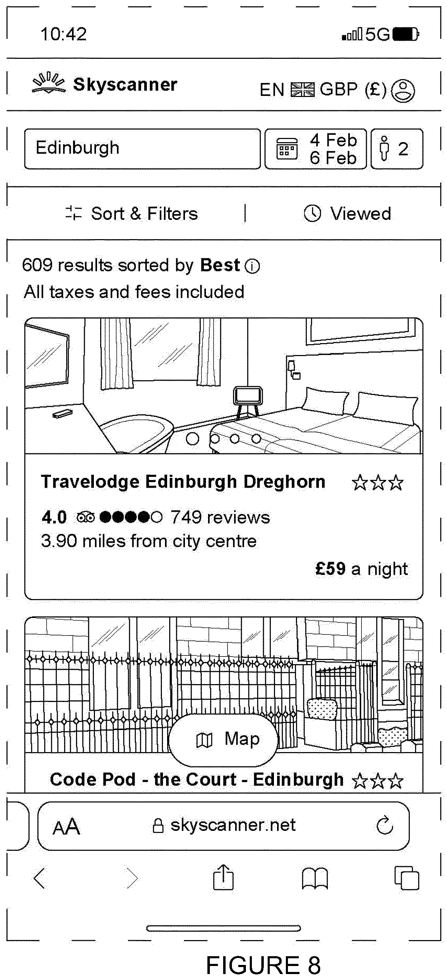

In an example, on the mobile device Web, the user interface (UI) for a hotel search website has hotel static info (e.g. stars, images, review counts, rating...) and doesn't have hotel price info. In an example, in a search performed using a desktop computer, the UI for a hotel search website has hotel static info and hotel price info, as shown for example in **Figure 7**. In an example, in a search performed on the mobile device Web using a mobile device (e.g. smartphone), the UI for a hotel search website has hotel static info and hotel price info, as shown for example in **Figure 8**.

In an example, a TTFR target value could be 2 s or less. In an example, a TTFR target value could be 3 s or less. In an example, a TTFR target value could be 4 s or less. In an example, a TTFR target value could be 5 s or less. In an example, a TTFR target value could be 10 s or less.

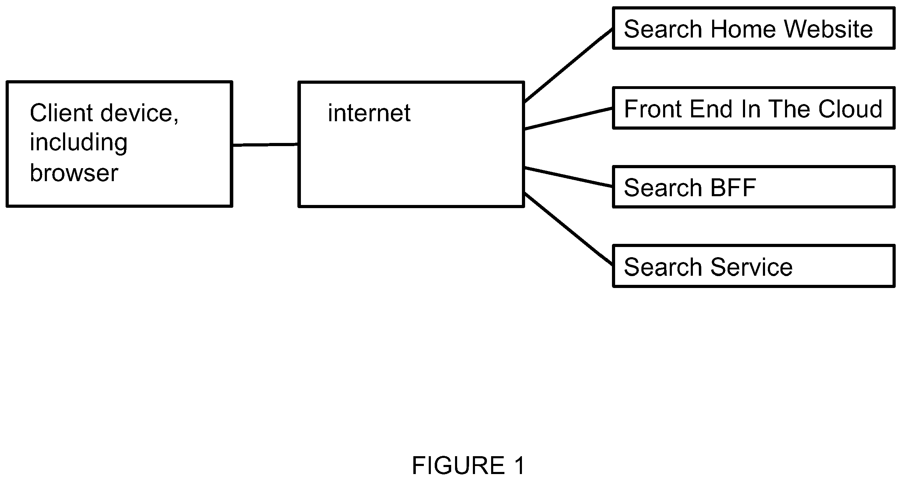

In an example, a client computer device, including a browser, is in connection with the internet. A search home website (e.g. an HTML server) is in connection with the internet. A front end in the cloud (e.g. a content delivery network (CDN), e.g. a static files server) is in connection with the internet. A back-end for front-end (BFF) application programming interface (API) server is in connection with the internet. A search service server is in connection with the internet. The client computer device (e.g. smartphone), including a browser, may be in wireless (e.g. cellular or WiFi) connection with the internet. The client computer device (e.g. desktop computer), including a browser, may be in wired connection with the internet. An example is shown in **Figure 1**. In an example, the search home website and the BFF server may be in the same server.

One problem which causes delay in providing search results is latency. This is because it takes time for a server to respond to a request from a browser on a client device. In a system including a client device including a browser, a search home website, a front end in the cloud including a content delivery network, a search BFF, and a search service server, interactions between the browser and the content delivery network can lead to a delay in a search request being received by a search service server, which leads to a delay in the first search result being received by the browser on the client device.

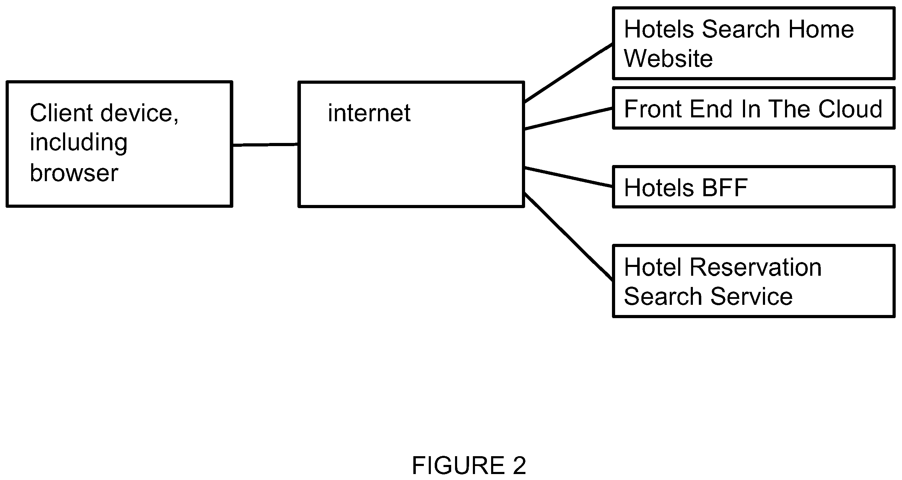

In an example, a client computer device, including a browser, is in connection with the internet. A hotels search home website (e.g. an HTML server) is in connection with the internet. A front end in the cloud (e.g. a content delivery network (CDN), e.g. a static files server) is in connection with the internet. A hotels back-end for front-end (BFF) application programming interface (API) server is in connection with the internet. A hotel reservation search service server (e.g. providing hotel data, reservation availability and price information) is in connection with the internet. The client computer device (e.g. smartphone), including a browser, may be in wireless (e.g. cellular or WiFi) connection with the internet. The client computer device (e.g. desktop computer), including a browser, may be in wired connection with the internet. An example is shown in **Figure 2**. In an example, the search home website and the BFF server may be in the same server.

**Figure 7** shows an example of hotel search results presented in a browser user interface on a desktop computer, in which the hotel search results include prices. **Figure 8** shows an example of hotel search results presented in a browser user interface on a smartphone, in which the hotel search results include prices.

One problem which causes delay in providing search results is latency. This is because it takes time for a server to respond to a request from a browser on a client device. In a system including a client device including a browser, a hotels search home website, a front end in the cloud including a content delivery network, a hotels search BFF, and a hotel reservation search service server, interactions between the browser and the content delivery network can lead to a delay in a search request being received by the hotel reservation search service, which leads to a delay in the first search result being received by the browser on the client device.

An API may be called a BFF, when the BFF serves responses to ease processing on the front end side. A front end includes a presentation layer. A back end includes a data accessing layer. In an example, a BFF may be used to perform language translation into a selected language, from a main language, in which the main language may be English.

An example, including a browser process, includes the following steps:
1) The user, using a client device including a browser, sends a search request to the hotels search home website. The hotels search home website receives a communication associated with this search request from the client device including the browser, and makes an asynchronous pre-search request to the Hotel Reservation Search Service server, to initiate a search cycle at the Hotel Reservation Search Service server. The browser receives associated HTML from the hotels search home website server.
2) After the HTML is downloaded to the client device including the browser, the browser parses the HTML.
3) When the Browser meets a cascading style sheets (CSS) and Script tag during parsing HTML, the browser downloads external CSS and script (e.g. JavaScript) files from the Front End in the Cloud static server.
4) After the CSS and script (e.g. JavaScript) files are downloaded from the Front End in the Cloud static server, the browser parses the CSS to render a web page component including a web page style and executes the script (e.g. JavaScript).
5) When the webpage component is rendered on the browser, the client device including the browser establishes a persistent connection to the hotels BFF server to poll the Hotel Reservation Search Service server. At intervals (e.g. every 500ms), the hotels BFF requests the Hotel Reservation Search Service to send hotel data relating to the asynchronous pre-search request that was sent to the Hotel Reservation Search Service server, until all the hotel data including all the hotel price info is received and sent to the client device including the browser, and rendered at the browser, and then the client device including the browser closes the persistent connection.

The Hotel Reservation Search Service server may use external services to retrieve the offers of each hotel and partner. Using external services to retrieve the offers of each hotel and partner takes time, and the whole process may be described as a search cycle. The Hotel Reservation Search Service server may initiate the search cycle, using some search parameters. The Hotel Reservation Search Service server may receive static hotel info, and data relating to the hotel partners, from a travel API. Static hotel info is non-changing information about the hotel, such as its address, a photo of the hotel, and its website, telephone number and e-mail address. The Hotel Reservation Search Service server may receive hotel reservation price info from the hotel partners.

In an example, the same search parameters can be sent in step 1) and in step 5). This can enable the Hotel Reservation Search Service to use the same search cycle in respect of the two requests, to ensure that the request in step 5) benefits from the earlier request in step 1), in that the search process in step 1) is started before step 5) occurs. Because the request in step 1) is sent to the Hotel Reservation Search Service server from the hotels search home website, and the request in step 5) may be sent to the hotels BFF server to poll the Hotel Reservation Search Service server, the requests in steps 1) and 5) may be sent to two different locations on the internet. Sending the requests to two different locations on the internet may speed up the search process, because in step 5) it may be significantly faster to send the request to the hotels BFF server to poll the Hotel Reservation Search Service server, rather than sending the request to the hotels search home website, then to the hotels BFF server to poll the Hotel Reservation Search Service server.

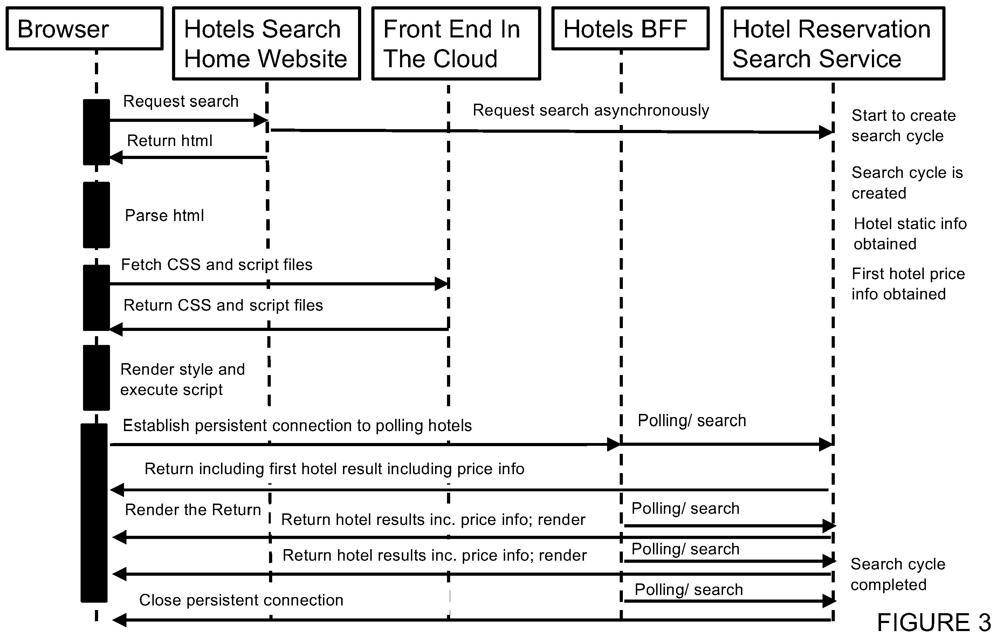

An example is shown in **Figure 3**.

An advantage is that the browser process and the Hotel Reservation Search Service server search cycle are performed in parallel. This helps to minimize the TTFR. This also helps to minimize the number of polling requests sent from the hotels BFF server to poll the Hotel Reservation Search Service server, since the search cycle is initiated earlier than if the search cycle at the Hotel Reservation Search Service server were being initiated when the browser establishes the persistent connection to the hotels BFF server to poll the Hotel Reservation Search Service server. This reduces energy usage, because sending more polling requests uses more energy.

In an example, in step 1), the hotels search home website checks that the search request has not come from an unwelcome bot, before making the asynchronous pre-search request to the Hotel Reservation Search Service server. The check that the search request has not come from an unwelcome bot may include checking the internet protocol (IP) address against a list of IP addresses associated with unwelcome bots, and if the search request has come from an IP address on the list of IP addresses associated with unwelcome bots, then the search request may be denied, or the origin of the search request may be offered a test to demonstrate that they are not a bot, and if they pass that test, then the search request may be proceeded with, but if they fail the test then the unwelcome bot may be blocked on the browser. The check that the search request has not come from an unwelcome bot may include checking the internet protocol (IP) address against a list of IP addresses associated with welcome bots, and if the search request has come from an IP address on the list of IP addresses associated with welcome bots, then the search request is not proceeded with, but the unwelcome bot is not blocked on the browser. The check that the search request has not come from an unwelcome bot may include checking the search request with a bot identification service, and if the bot identification service identifies that the search request has potentially come from an unwelcome bot, then the search request may be denied, or the origin of the search request may be offered a test to demonstrate that they are not a bot, and if they pass that test, then the search request may be proceeded with, but if they fail the test then the unwelcome bot may be blocked on the browser. An example of a welcome bot is one with which the hotels search home website collaborates to achieve search engine optimization. It is advantageous not to send the pre-search request, for a request received from a bot (e.g. an unwelcome bot), to the Hotel Reservation Search Service, as such a pre-search request would lead to an increase in traffic to the Hotel Reservation Search Service, which is wasteful of computational resources, and which wastes energy.

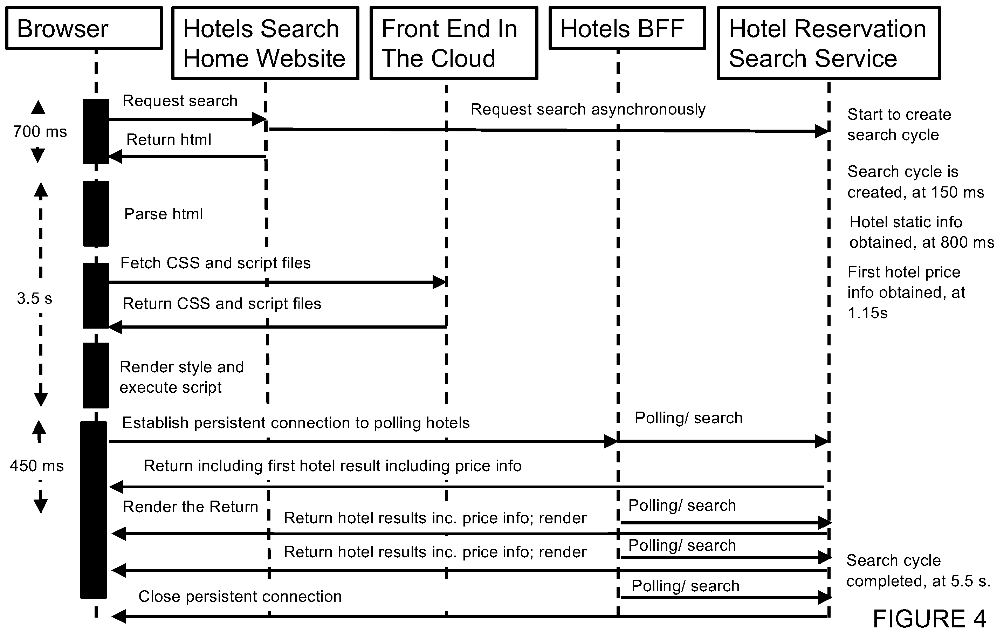

An example including example timings is shown in **Figure 4**. In **Fig. 4**, the TTFR is 0.7+ 3.5 +0.45 = 4.65 s, as shown at the left hand side of the Figure. If the asynchronous search had not been sent at the beginning, and instead the search request had been sent when the persistent connection was established to polling hotels, the TTFR would have been at least 1.15s longer, based on the timings shown at the right hand side of **Figure 4**, in which the first hotel price info and the hotel static info are obtained 1.15 s after the hotel reservation search service server receives the search request. In the example of **Figure 4**, there is a slow network connection, which is why it takes 3.5 s to parse the HTML, fetch the CSS and script files, receive the CSS and script files, and render the style and execute the script. In the example of **Figure 4**, the polling/search request is sent from Hotels BFF to the Hotel Reservation Search Service every 500 ms.

In examples, polling includes calling a backend for more results. In examples, polling includes actively sampling the status of an external device by a client program, as a synchronous activity. Polling may continue until the backend returns that there are no more results, after which the polling is closed, and the search cycle is finished.

### CROSS-REGION SOLUTION FOR PRE-SEARCH AND POLLING

Typically, a gateway is associated with the hotels search home website server, the hotels BFF server and hotel reservation search service server. The gateway routes each request received from the browser to a selected group of servers associated with a geographical region (e.g. Western Europe, Eastern Europe, Asia, North America etc.). In general, it is possible that the selected group of servers associated with a geographical region can change within a session, e.g. from Western Europe to North America; an example situation may be because the relative amount of network traffic makes using one group of servers preferable to using another group of servers. Such a situation could create a problem for the pre-search (i.e. the asynchronous search request), because if the pre-search (i.e. the asynchronous search request) uses a group of servers associated with a first geographical region, and the persistent connection is established for polling hotels to a group of servers associated with a second geographical region, which is different to the first geographic region, the process may not work, or the process may require calls between the group of servers associated with the first geographical region and the group of servers associated with the second geographical region, which slows down the process, contrary to the objective of reducing the TTFR, and the calls between the group of servers associated with the first geographical region and the group of servers associated with the second geographical region may increase costs, and typically will increase energy usage.

Therefore when returning the search page html from the hotels search home website, this html includes a region identifier (e.g. a region value), which may be defined as an environment variable. In response to the data returned by the hotels search home website, the browser may set the region using a cookie, e.g. a session cookie. Then when the persistent connection is established for polling hotels to the hotel reservation search service, the request header includes the region obtained from the cookie, e.g. a session cookie. Then a gateway associated with the hotels search home website server, the hotels BFF server and hotel reservation search service server routes the request received from the browser to a group of servers associated with a geographical region which is the region defined by the cookie, e.g. a session cookie. This may be described as defining the session affinity.

In this case, an example process, including a browser process, includes the following steps:
1) The user, using a client device including a browser, sends a search request to the hotels search home website. The hotels search home website receives a communication associated with this search request from the client device including the browser, and makes an asynchronous pre-search request to the Hotel Reservation Search Service server, to initiate a search cycle at the Hotel Reservation Search Service server. The browser receives associated HTML and a region defined in an environment variable, from the hotels search home website server. The browser stores the region defined in an environment variable in a cookie, e.g. a session cookie.
2) After the HTML is downloaded to the client device including the browser, the browser parses the HTML.
3) When the Browser meets a cascading style sheets (CSS) and Script tag during parsing HTML, the browser downloads external CSS and script (e.g. JavaScript) files from the Front End in the Cloud static server.
4) After the CSS and script (e.g. JavaScript) files are downloaded from the Front End in the Cloud static server, the browser parses the CSS to render a web page component including a web page style and executes the script (e.g. JavaScript).
5) When the webpage component is rendered on the browser, the client device including the browser establishes a persistent connection to the hotels BFF server to poll the Hotel Reservation Search Service server, in which the session affinity is set by the request header, and then a gateway associated with the hotels search home website server, the hotels BFF server and hotel reservation search service server will route this traffic to the region defined in the cookie, e.g. a session cookie. At intervals (e.g. every 500ms), the hotels BFF requests the Hotel Reservation Search Service to send hotel data relating to the asynchronous pre-search request that was sent to the Hotel Reservation Search Service server, until all the hotel data including all the hotel price info is received and sent to the client device including the browser, and rendered at the browser, then the client device including the browser closes the persistent connection.

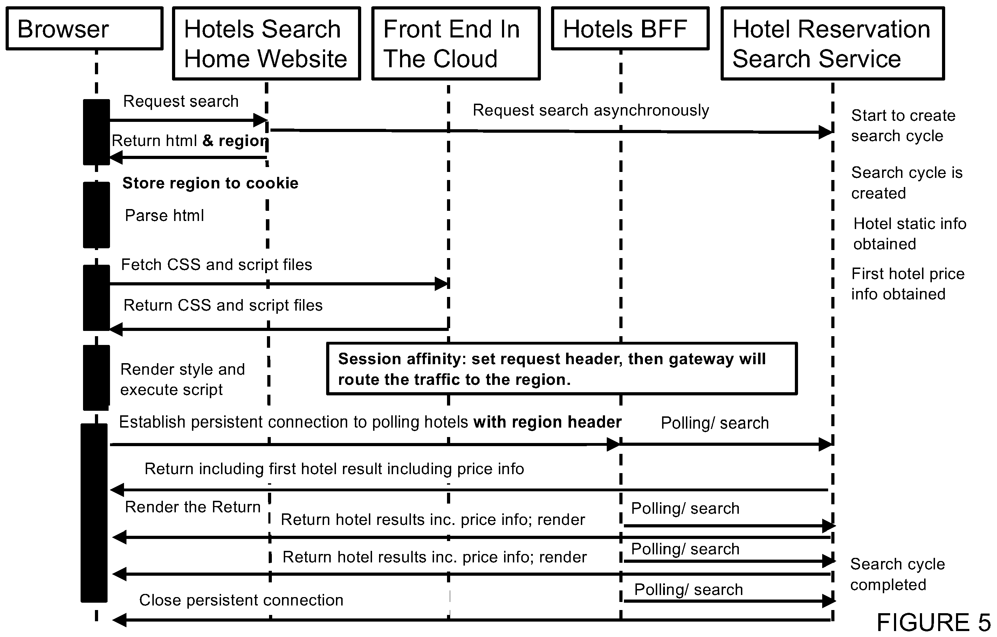

An example is shown in **Figure 5**.

In an example, it may be appropriate to provide first the hotel static info to the browser executing on a client device, and only provide the related price info afterwards, if the browser executing on client device requests the price info. One reason is that the hotel static info is typically available more quickly than the price info, because the price info changes much more quickly than the hotel static info, and therefore requests for up-to-date price information may need to be made by the hotel reservation search service before the price info can be supplied. Another reason is that if the client device has a small screen, e.g. on a smartphone, it may be preferable to provide initially only the hotel static info, and only provide the price info if the price info is requested, to keep the amount of data displayed on the screen down, and to keep the amount of data transmitted to the mobile device down, commensurate with the small screen size, and commensurate with the mobile communications, respectively. In this case, an example process, including a browser process, includes the following steps:
1) The user, using a client device including a browser, sends a search request to the hotels search home website. The hotels search home website receives a communication associated with this search request from the client device including the browser, and makes an asynchronous pre-search request to the Hotel Reservation Search Service server, to initiate a search cycle at the Hotel Reservation Search Service server. The browser receives associated HTML and a region defined in an environment variable, from the hotels search home website server. The browser stores the region defined in an environment variable in a cookie, e.g. a session cookie.
2) After the HTML is downloaded to the client device including the browser, the browser parses the HTML.
3) When the Browser meets a cascading style sheets (CSS) and Script tag during parsing HTML, the browser downloads external CSS and script (e.g. JavaScript) files from the Front End in the Cloud static server.
4) After the CSS and script (e.g. JavaScript) files are downloaded from the Front End in the Cloud static server, the browser parses the CSS to render a web page component including a web page style and executes the script (e.g. JavaScript).
5) When the webpage component is rendered on the browser, the client device including the browser establishes a persistent connection to the hotels BFF server to poll the Hotel Reservation Search Service server, in which the session affinity is set by the request header, and then a gateway associated with the hotels search home website server, the hotels BFF server and hotel reservation search service server will route this traffic to the region defined in the cookie, e.g. a session cookie. At intervals (e.g. every 500ms), the hotels BFF requests the Hotel Reservation Search Service to send hotel data relating to the asynchronous pre-search request that was sent to the Hotel Reservation Search Service server, until all the hotel data, including the hotel price info, is received by the hotels BFF server. However, in a first stage the hotels BFF server sends the hotel static data and not the hotel price info to the client device including the browser, and the hotel static data and not the hotel price info is rendered at the browser, and a region identifier from the hotels BFF server is sent to the browser and stored as a cookie. When the hotels BFF server has received all the hotel static info and all the hotel price info, then the hotels BFF server closes the persistent connection. The hotels BFF server only sends the hotel price info to the client device including the browser if the client device including the browser requests the hotel price info; such a request may include the region header from the cookie which records the region identifier sent from the hotels BFF server, to ensure that the same region is used for the hotel price info that was used to provide the hotel static info.

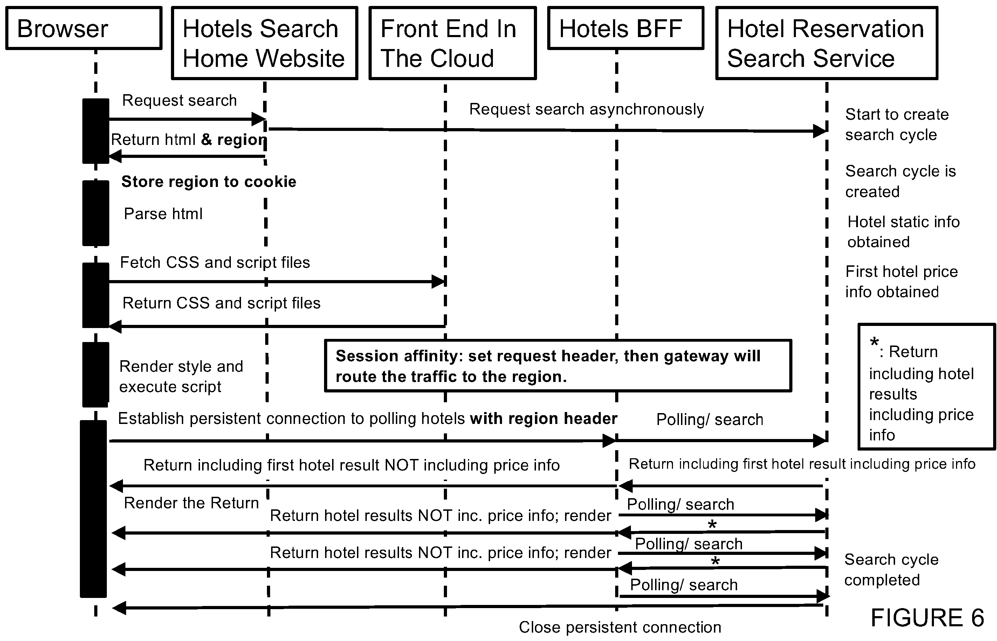

An example is shown in **Figure 6**.

In an example, the client device is a mobile device, e.g. a smartphone.

In an optional further step, if the hotels BFF server sends the hotel price info to the client device including the browser, the hotels BFF server sends a further region identifier from the hotels BFF server to the browser which is stored in a further cookie at the client device. Then if a checkout process is requested from the browser to the hotels BFF server, the request includes the region header from the further cookie, to ensure that the same region is used for the checkout process that was used to provide the hotel price info.

### EXAMPLE IMPLEMENTATION

In an example implementation, a new field is included in the pre-search request which is sent to the (e.g. hotel reservation) search service, to indicate that this request is an asynchronous search request, including to start the search cycle. In an example, the new field is Boolean, and in which TRUE indicates that the request is for the initialization of the search cycle.

In an example implementation, the (e.g. hotels) search home website uses javascript, typescript, node javascript and React language and frameworks; the (e.g. hotels) BFF server uses node javascript language and frameworks, and the (e.g. hotel reservation) search service uses python and aiohttp language and frameworks.

The hotel reservation search service pre-search request may contain one or more, or all, of the following parameters: 'market', 'locale', 'rooms', 'adults', 'currency', 'checkin_date',
'checkout_date', 'sorting_version', 'children_ages', 'source', 'cug_segments', 'fast_search',
't_version', 'trace_info'.

### ADDITIONAL OR ALTERNATIVE METHOD FOR REDUCING THE TTFR

In example implementations, for desktop, mobile or even tablet client devices executing a respective browser program, for content served by the Front End In The Cloud, the same content is served to all devices, the content including components including CSS and script (e.g. javascript), and then CSS media queries are made by the browser, to provide responsive rendering, e.g. based on browser screen width, which varies according to the device (e.g. desktop computer, laptop computer, internet TV, smartphone, tablet computer).

However most of the components including CSS and script (e.g. javascript) used in the search home website (e.g. hotels search home website) have completely different designs for different devices such as desktop computers and mobile devices (e.g. smartphones), which makes the components impossible or unfeasible to reuse, e.g. it is impossible or unfeasible to use the CSS and script (e.g. javascript) for desktop computers on smartphones, and/or vice versa. For example, for content served by the Front End In The Cloud, the content includes respective components including CSS and script (e.g. javascript) for a plurality of respective devices (e.g. desktop computer, laptop computer, internet TV, smartphone, tablet computer), and that content is bundled together. When the user visits the search home website (e.g. hotels search home website) using a mobile device (e.g. smartphone), the CSS and script (e.g. javascript) implemented for the desktop design for a desktop device will be received but unused: the CSS and script (e.g. javascript) implemented for the desktop design for a desktop device will be downloaded to the mobile device browser, and not executed. This downloaded but unused content can significantly increase the TTFR because more data has to be downloaded from the Front End In The Cloud before search results may be received from the search service server (e.g. hotel reservation search service). The TTFR is particularly increased when the user is using a low network speed (e.g. 3G), as the user needs to wait for all the CSS and script (e.g. javascript) content to download and be executed and/or processed, before search results can be received.

Therefore, to reduce the TTFR, when the browser is fetching the CSS and script files from the Front End In the Cloud server, the browser identifies the client device class (e.g. desktop computer, laptop computer, internet TV, smartphone, tablet computer) to the Front End In the Cloud server, and in response the Front End In the Cloud server returns to the device a corresponding selected set of CSS and script files, which is selected based on the client device class identified by the browser. For example, if the browser identifies the client device class as a smartphone to the Front End In the Cloud server, then the Front End In the Cloud server returns to the device a corresponding set of CSS and script files, which is selected based on the client device class being a smartphone, as identified by the browser. For example, if the browser identifies the client device class as a desktop computer to the Front End In the Cloud server, then the Front End In the Cloud server returns to the device a corresponding set of CSS and script files, which is selected based on the client device class being a desktop computer, as identified by the browser.

In another example, the TTFR may be reduced by reducing the polling interval.

### OTHER SEARCH SERVICES

Although in the above we have emphasized applications relating to search services for hotel reservations, other applications are possible, such as search services for flights, search services for rental vehicles (e.g. cars, automobiles, vans, trucks, boats, ships, aircraft, motorbikes), search services for home loans, search services for insurance (e.g. car insurance, home insurance, travel insurance, life insurance, pet insurance) search services for money loans, search services for mortgage loans, search services for mobile phone purchase, search services for broadband deals, search services for real estate, search services for rental accommodation, and search services for dating.

### CASCADING STYLE SHEETS (CSS)

Cascading Style Sheets (CSS) is a style sheet language used for describing the presentation of a document written in a markup language such as HyperText Markup Language (HTML) or Extensible Markup Language (XML) (e.g. including XML dialects such as Scalable Vector Graphics (SVG), Mathematical Markup Language (MathML) or Extensible HyperText Markup Language (XHTML)). CSS is a cornerstone technology of the World Wide Web, alongside HTML and JavaScript.

CSS is designed to enable the separation of content and presentation, including layout, colors, and fonts. This separation can improve content accessibility; provide more flexibility and control in the specification of presentation characteristics; enable multiple web pages to share formatting by specifying the relevant CSS in a separate .css file, which reduces complexity and repetition in the structural content; and enables the .css file to be cached to improve the page load speed between the pages that share the file and its formatting.

Separation of formatting and content also makes it feasible to present the same markup page in different styles for different rendering methods, such as on-screen, in print, by voice (e.g. via speech-based browser or screen reader), and on Braille-based tactile devices. CSS also has rules for alternate formatting if the content is accessed on a mobile device.

### JAVASCRIPT

JavaScript, often abbreviated as JS, is a programming language that is one of the core technologies of the World Wide Web, alongside HTML and CSS. As of 2022, 98% of websites use JavaScript on the client side for webpage behavior, often incorporating third-party libraries. All major web browsers have a dedicated JavaScript engine to execute the code on users' devices.

JavaScript is a high-level, often just-in-time compiled language that conforms to the ECMAScript standard (ECMAScript is a JavaScript standard intended to ensure the interoperability of web pages across different browsers). JavaScript has dynamic typing, prototype-based object-orientation, and first-class functions. It is multi-paradigm, supporting event-driven, functional, and imperative programming styles. It has application programming interfaces (APIs) for working with text, dates, regular expressions, standard data structures, and the Document Object Model (DOM).

The ECMAScript standard does not include any input/output (I/O), such as networking, storage, or graphics facilities. In practice, the web browser or other runtime system provides JavaScript APIs for I/O.

JavaScript engines were originally used only in web browsers, but are now core components of some servers and a variety of applications. The most popular runtime system for this usage is Node.js.

### HTML ELEMENT

An HTML element is a type of HTML (HyperText Markup Language) document component, one of several types of HTML nodes (there are also text nodes, comment nodes and others). An HTML document includes a tree of simple HTML nodes, such as text nodes, and HTML elements, which add semantics and formatting to parts of document (e.g., make text bold, organize it into paragraphs, lists and tables, or embed hyperlinks and images). Each element can have HTML attributes specified. Elements can also have content, including other elements and text.

### Elements vs. tags

As is generally understood, the position of an element is indicated as spanning from a start tag and is terminated by an end tag. This is the case for many, but not all, elements within an HTML document. Certain tags can be omitted. Omitting an element's start tag does not mean the element is not present; it is implied, but it is still there. Informally, HTML elements are sometimes referred to as "tags", though many prefer the term "tag" strictly in reference to the markup delimiting the start and end of an element.

### SERVERS

Where the term "server" is used, this may refer to a single server, to a group of servers, or to servers in the cloud, as would be clear to the person skilled in the art.

### Note

It is to be understood that the above-referenced arrangements are only illustrative of the application for the principles of the present invention. The appended claims define the scope of protection. While the present invention has been shown in the drawings and fully described above with particularity and detail in connection with what is presently deemed to be the most practical and preferred example(s) of the invention, it will be apparent to those of ordinary skill in the art that numerous modifications can be made without departing from the principles and concepts of the invention as set forth herein.

## Claims

1. A computer-implemented method of searching for search results using a browser executing on a client device, a search home website, a back-end for front-end (BFF) server, and a search service server, the method including the steps of:
(i) the browser executing on the client device sending a search request to the search home website, the search request including search parameters;
(ii) the search home website sending an asynchronous pre-search request to the search service server, the asynchronous pre-search request including the search parameters, and the search service server initiating a search cycle using the search parameters in response to the asynchronous pre-search request;
(iii) the browser receiving from the search home website HTML data including a Cascading Style Sheets (CSS) and script tag;
(iv) the browser executing the CSS and script tag to download CSS and script files from a front end server;
(v) the browser parsing the CSS files to render a web page component including a web page style;
(vi) the browser executing the script files such that the client device including the browser establishes a persistent connection to the back-end for front-end (BFF) server, and sends the search parameters to the BFF server, the BFF server polling the search service server using the search parameters;
(vii) the search service server recognizing that the search parameters it received in step (vi) correspond to the search parameters it received in step (ii), to use the search cycle initiated in step (ii) to provide first search results from the search cycle to the BFF server, in response to the polling from the BFF server;
(viii) the BFF server sending the first search results to the browser executing on the client device, and
(ix) the browser providing the first search results for display on a screen of the client device.

2. The method of Claim 1, wherein the search request is a search request for hotel reservations or for flights, or for rental vehicles (e.g. cars, automobiles, vans, trucks, boats, ships, aircraft, motorbikes), or for home loans, or for insurance (e.g. car insurance, home insurance, travel insurance, life insurance, pet insurance), or for money loans, or for mortgage loans, or for mobile phone purchase, or for broadband deals, or for real estate, or for rental accommodation, or for dating.

3. The method of any previous Claim, wherein the client device is a desktop computer, a laptop computer, an internet TV, a smartphone, or a tablet computer.

4. The method of any previous Claim, wherein the client device is in wireless (e.g. cellular or WiFi) connection with the internet.

5. The method of any previous Claim, wherein the BFF server polls the search service server at intervals to request the Search Service server to send data relating to the asynchronous pre-search request that was sent to the Search Service server.

6. The method of any previous Claim, wherein the BFF server polls the search service server at intervals to request the Search Service server to send data relating to the asynchronous pre-search request that was sent to the Search Service server, until all the search results are received and sent to the client device including the browser, and rendered at the browser, and then the client device including the browser closes the persistent connection.

7. The method of any previous Claim, wherein the search home website checks that the search request has not come from a bot, and if it is determined that the search request appears not to have come from a bot, then the search process is proceeded with.

8. The method of any previous Claim, wherein a gateway associated with a search home website server including the search home website selects a geographic region from a plurality of geographic regions, and then routes the search request received from the browser to a group of servers in the geographic region, the group of servers including the BFF server and the search service server, the search service website returning an identifier associated with the selected geographic region to the browser, and the browser using the identifier associated with the selected geographic region to enable the gateway to route the search requests received from the browser to the group of servers in the geographic region.

9. The method of Claim 8, wherein the browser sets the selected geographic region using a cookie, e.g. a session cookie.

10. The method of Claims 8 or 9, wherein when the persistent connection is established for polling to the search service, the request header includes the region obtained from the cookie, e.g. a session cookie.

11. The method of any previous Claim, in which first search data (e.g. hotel static info) are provided by the BFF server to the browser executing on the client device, and second search data (e.g. related price info) is only provided afterwards, if the browser executing on the client device requests the second search data (e.g. related price info).

12. The method of any previous Claim, in which a field is included in the pre-search request which is sent to the (e.g. hotel reservation) search service, to indicate that this request is an asynchronous search request, including to start the search cycle.

13. The method of any previous Claim, (a) in which the (e.g. hotels) search home website uses javascript, typescript, node javascript and React language and frameworks; the (e.g. hotels) BFF server uses node javascript language and frameworks, and the (e.g. hotel reservation) search service uses python and aiohttp language and frameworks; or
(b) in which when the browser is fetching the CSS and script files from the Front End server, the browser identifies a client device class (e.g. desktop computer, laptop computer, internet TV, smartphone, tablet computer) to the Front End server, and the browser receives in response from the Front End server a corresponding selected set of CSS and script files, which correspond to the client device class identified by the browser.

14. A system including a client device including a browser program and a screen, a search home website, a back-end for front-end (BFF) server, and a search service server, wherein
(i) the browser is configured to execute on the client device to send a search request to the search home website, the search request including search parameters;
(ii) the search home website is configured to send an asynchronous pre-search request to the search service server, the asynchronous pre-search request including the search parameters, and the search service server is configured to initiate a search cycle using the search parameters in response to the asynchronous pre-search request;
(iii) the browser is configured to receive from the search home website HTML data including a Cascading Style Sheets (CSS) and script tag;
(iv) the browser is configured to execute the CSS and script tag to download CSS and script files from a front end server;
(v) the browser is configured to parse the CSS files to render a web page component including a web page style;
(vi) the browser is configured to execute the script files, wherein in response to the browser executing the script files the client device including the browser is configured to establish a persistent connection to the back-end for front-end (BFF) server, and to send the search parameters to the BFF server, wherein the BFF server is configured to poll the search service server using the search parameters;
(vii) the search service server is configured to recognize that the search parameters it received in (vi) correspond to the search parameters it received in (ii), to use the search cycle initiated in (ii) to provide first search results from the search cycle to the BFF server, in response to the polling from the BFF server;
(viii) the BFF server is configured to send the first search results to the browser executing on the client device, and
(ix) the browser is configured to provide the first search results for display on the screen of the client device.

15. The system of Claim 14, the system configured to perform a method of any of Claims 1 to 13.

## Patentansprüche

1. Computerimplementiertes Verfahren zum Suchen nach Suchergebnissen unter Verwendung eines Browsers, der auf einer Client-Vorrichtung ausgeführt wird, einer Such-Startwebsite, eines Backend-für-Frontend(BFF)-Servers, und eines Suchdienstservers, wobei das Verfahren die folgenden Schritte beinhaltet:
(i) Senden, durch den Browser, der auf der Client-Vorrichtung ausgeführt wird, einer Suchanfrage an die Such-Startwebsite, wobei die Suchanfrage Suchparameter beinhaltet;
(ii) Senden, durch die Such-Startwebsite, einer asynchronen Vorsuchanfrage an den Suchdienstserver, wobei die asynchrone Vorsuchanfrage die Suchparameter beinhaltet, und Initiieren, durch den Suchdienstserver, als Antwort auf die asynchrone Vorsuchanfrage, eines Suchzyklus unter Verwendung der Suchparameter;
(iii) Empfangen, durch den Browser, von der Such-Startwebsite, von HTML-Daten, die Cascading-Style-Sheets (CSS) und Skript-Tags beinhalten;
(iv) Ausführen, durch den Browser, der CSS und des Skript-Tags, um CSS- und Skriptdateien von einem Frontend-Server herunterzuladen;
(v) Parsen, durch den Browser, der CSS-Dateien, um eine Webseitenkomponente, die eine Webseitenvorlage beinhaltet, darzustellen;
(vi) Ausführen, durch den Browser, der Skriptdateien, so dass die Client-Vorrichtung, die den Browser beinhaltet, eine dauerhafte Verbindung zu dem Backend-für-Frontend(BFF)-Server aufbaut und die Suchparameter an den BFF-Server sendet, wobei der BFF-Server den Suchdienstserver unter Verwendung der Suchparameter abfragt;
(vii) Erkennen, durch den Suchdienstserver, dass die Suchparameter, die er in Schritt (vi) empfangen hat, den Suchparametern, die er in Schritt (ii) empfangen hat, entsprechen, um den in Schritt (ii) initiierten Suchzyklus dazu zu verwenden, als Antwort auf das Abfragen durch den BFF-Server erste Suchergebnisse aus dem Suchzyklus an den BFF-Server bereitzustellen;
(viii) Senden, durch den BFF-Server, der ersten Suchergebnisse an den Browser, der auf der Client-Vorrichtung ausgeführt wird, und
(ix) Bereitstellen, durch den Browser, der ersten Suchergebnisse zur Anzeige auf einem Bildschirm der Client-Vorrichtung.

2. Verfahren nach Anspruch 1, wobei die Suchanfrage eine Suchanfrage für Hotelreservierungen oder für Flüge oder für Mietfahrzeuge (z. B. Autos, Kraftfahrzeuge, Lieferwagen, Lastwagen, Boote, Schiffe, Flugzeuge, Motorräder) oder für Hausdarlehen oder für Versicherungen (z. B. Autoversicherung, Hausversicherung, Reiseversicherung, Lebensversicherung, Haustierversicherung) oder für Gelddarlehen oder für Hypothekendarlehen oder für den Kauf eines Mobiltelefons oder für Breitbandangebote oder für Immobilien oder für Unterkünfte zur Miete oder für Dating ist.

3. Verfahren nach einem der vorhergehenden Ansprüche, wobei die Client-Vorrichtung ein Desktop-Computer, ein Laptop-Computer, ein Internet-TV, ein Smartphone oder ein Tablet-Computer ist.

4. Verfahren nach einem der vorhergehenden Ansprüche, wobei die Client-Vorrichtung in einer drahtlosen Verbindung (z. B. über Mobilfunk oder WLAN) mit dem Internet steht.

5. Verfahren nach einem der vorhergehenden Ansprüche, wobei der BFF-Server den Suchdienstserver in Intervallen abfragt, um den Suchdienstserver aufzufordern, Daten zu senden, die sich auf die asynchrone Vorsuchanfrage beziehen, die an den Suchdienstserver gesendet wurde.

6. Verfahren nach einem der vorhergehenden Ansprüche, wobei der BFF-Server den Suchdienstserver in Intervallen abfragt, um den Suchdienstserver aufzufordern, Daten zu senden, die sich auf die asynchrone Vorsuchanfrage beziehen, die an den Suchdienstserver gesendet wurde, bis alle Suchergebnisse empfangen und an die Client-Vorrichtung, die den Browser beinhaltet, gesendet und in dem Browser dargestellt wurden, und dann die Client-Vorrichtung, die den Browser beinhaltet, die dauerhafte Verbindung trennt.

7. Verfahren nach einem der vorhergehenden Ansprüche, wobei die Such-Startwebsite prüft, ob die Suchanfrage nicht von einem Bot stammt, und, wenn bestimmt wird, dass die Suchanfrage offenbar nicht von einem Bot stammt, mit dem Suchvorgang fortgefahren wird.

8. Verfahren nach einem der vorhergehenden Ansprüche, wobei ein Gateway, das einem Such-Startwebsiteserver, der die Such-Startwebsite beinhaltet, zugeordnet ist, eine geografische Region aus einer Vielzahl von geografischen Regionen auswählt und dann die Suchanfrage, die von dem Browser empfangen wurde, an eine Gruppe von Servern in der geografischen Region weiterleitet, wobei die Gruppe von Servern den BFF-Server und den Suchdienstserver beinhaltet, wobei die Suchdienstwebsite eine Kennung, die der ausgewählten geografischen Region zugeordnet ist, an den Browser zurückgibt und der Browser die Kennung, die der ausgewählten geografischen Region zugeordnet ist, dazu verwendet, das Gateway in die Lage zu versetzen, die Suchanfragen, die von dem Browser empfangen werden, an die Gruppe von Servern in der geografischen Region weiterzuleiten.

9. Verfahren nach Anspruch 8, wobei der Browser die ausgewählte geografische Region unter Verwendung eines Cookies, z. B. eines Sitzungscookies, festlegt.

10. Verfahren nach Anspruch 8 oder 9, wobei, wenn die dauerhafte Verbindung zum Abfragen des Suchdienstes hergestellt wird, der Anforderungs-Header die Region, die aus dem Cookie, z. B. einem Sitzungscookie, erlangt wurde, beinhaltet.

11. Verfahren nach einem der vorhergehenden Ansprüche, in dem erste Suchdaten (z. B. statische Hotelinformationen) von dem BFF-Server an den Browser, der auf der Client-Vorrichtung ausgeführt wird, bereitgestellt werden und zweite Suchdaten (z. B. zugehörige Preisinformationen) erst anschließend bereitgestellt werden, wenn der Browser, der auf der Client-Vorrichtung ausgeführt wird, die zweiten Suchdaten (z. B. zugehörige Preisinformationen) anfordert.

12. Verfahren nach einem der vorhergehenden Ansprüche, in dem ein Feld in der Vorsuchanfrage, die an den (z. B. Hotelreservierungs-) Suchdienst gesendet wird, beinhaltet ist, um anzuzeigen, dass es sich bei dieser Anfrage um eine asynchrone Suchanfrage handelt, die Startens des Suchzyklus beinhaltet.

13. Verfahren nach einem der vorhergehenden Ansprüche, (a) in dem die (z. B. Hotel-)Suchstartseite JavaScript, Typescript, Node-JavaScript und React-Sprache und -Frameworks verwendet; der (z. B. Hotel-)BFF-Server Node-JavaScript-Sprache und - Frameworks verwendet und der (z. B. Hotelreservierungs-) Suchdienst die Python- und Aiohttp-Sprache und -Frameworks verwendet; oder
(b) in dem, wenn der Browser die CSS- und Skriptdateien von dem Frontend-Server abruft, der Browser eine Client-Vorrichtungsklasse (z. B. Desktop-Computer, Laptop-Computer, Internet-TV, Smartphone, Tablet-Computer) für den Frontend-Server identifiziert und der Browser als Antwort von dem Frontend-Server einen entsprechenden ausgewählten Satz von CSS- und Skriptdateien empfängt, die der Client-Vorrichtungsklasse, die durch den Browser identifiziert wurde, entsprechen.

14. System, das eine Client-Vorrichtung beinhaltet, die ein Browserprogramm und einen Bildschirm, eine Such-Startwebsite, einen Backend-für-Frontend-Server(BFF)-Server und einen Suchdienstserver beinhaltet, wobei
(i) der Browser dazu konfiguriert ist, auf der Client-Vorrichtung ausgeführt zu werden, um eine Suchanfrage an die Such-Startwebsite zu senden, wobei die Suchanfrage Suchparameter beinhaltet;
(ii) die Such-Startwebsite dazu konfiguriert ist, die asynchrone Vorsuchanfrage an den Suchdienstserver zu senden, wobei die asynchrone Vorsuchanfrage die Suchparameter beinhaltet, und der Suchdienstserver dazu konfiguriert ist, als Antwort auf die asynchrone Vorsuchanfrage einen Suchzyklus unter Verwendung der Suchparameter zu initiieren;
(iii) der Browser dazu konfiguriert ist, von der Such-Startwebsite HTML-Daten, die Cascading-Style-Sheets (CSS) und Skript-Tags beinhalten, zu empfangen;
(iv) der Browser dazu konfiguriert ist, die CSS und das Skript-Tag auszuführen, um CSS- und Skriptdateien von einem Frontend-Server herunterzuladen;
(v) der Browser dazu konfiguriert ist, die CSS-Dateien zu parsen, um eine Webseitenkomponente, die eine Webseitenvorlage beinhaltet, darzustellen;
(vi) der Browser dazu konfiguriert ist, die Skriptdateien auszuführen, wobei die Client-Vorrichtung, die den Browser beinhaltet, als Antwort auf das Ausführen der Skript-Dateien durch den Browser dazu konfiguriert ist, eine dauerhafte Verbindung zu dem Backend-für-Frontend(BFF)-Server aufzubauen und die Suchparameter an den BFF-Server zu senden, wobei der BFF-Server dazu konfiguriert ist, den Suchdienstserver unter Verwendung der Suchparameter abzufragen;
(vii) der Suchdienstserver dazu konfiguriert ist, zu erkennen, dass die Suchparameter, die er in Schritt (vi) empfangen hat, den Suchparametern entsprechen, die er in Schritt (ii) empfangen hat, um den in Schritt (ii) initiierten Suchzyklus dazu zu verwenden, als Antwort auf das Abfragen durch den BFF-Server erste Suchergebnisse aus dem Suchzyklus an den BFF-Server bereitzustellen;
(viii) der BFF-Server dazu konfiguriert ist, die ersten Suchergebnisse an den Browser, der auf der Client-Vorrichtung ausgeführt wird, zu senden, und
(ix) der Browser dazu konfiguriert ist, die ersten Suchergebnisse zur Anzeige auf einem Bildschirm der Client-Vorrichtung bereitzustellen.

15. System nach Anspruch 14, wobei das System dazu konfiguriert ist, ein Verfahren nach einem der Ansprüche 1 bis 13 durchzuführen.

## Revendications

1. Procédé mis en œuvre par ordinateur pour rechercher des résultats de recherche à l'aide d'un navigateur exécuté sur un dispositif client, d'un site Web de recherche, d'un serveur back-end pour front-end (BFF) et d'un serveur de service de recherche, le procédé comprenant les étapes suivantes :
(i) le navigateur exécuté sur le dispositif client envoie une demande de recherche au site Web de recherche, la demande de recherche comprenant des paramètres de recherche ;
(ii) le site Web de recherche envoie une demande de pré-recherche asynchrone au serveur de service de recherche, la demande de pré-recherche asynchrone comprenant les paramètres de recherche, et le serveur de service de recherche initiant un cycle de recherche en utilisant les paramètres de recherche en réponse à la demande de pré-recherche asynchrone ;
(iii) le navigateur recevant du site Web de recherche des données HTML, y compris des feuilles de style en cascade (CSS) et une balise de script ;
(iv) le navigateur exécutant les CSS et la balise de script pour télécharger les fichiers CSS et le script à partir d'un serveur frontal ;
(v) le navigateur analysant les fichiers CSS pour restituer un composant de page Web comprenant un style de page Web ;
(vi) le navigateur exécutant les fichiers de script de telle sorte que le dispositif client, y compris le navigateur, établisse une connexion persistante au serveur back-end pour front-end (BFF) et envoie les paramètres de recherche au serveur BFF, le serveur BFF interrogeant le serveur de service de recherche à l'aide des paramètres de recherche ;
(vii) le serveur de service de recherche reconnaissant que les paramètres de recherche qu'il a reçus à l'étape (vi) correspondent aux paramètres de recherche qu'il a reçus à l'étape (ii), pour utiliser le cycle de recherche initié à l'étape (ii) pour fournir les premiers résultats de recherche du cycle de recherche au serveur BFF, en réponse à l'interrogation du serveur BFF ;
(viii) le serveur BFF envoie les premiers résultats de recherche au navigateur exécuté sur le dispositif client, et
(ix) le navigateur fournissant les premiers résultats de recherche à afficher sur un écran du dispositif client.

2. Procédé selon la revendication 1, dans lequel la demande de recherche est une demande de recherche pour des réservations d'hôtel ou pour des vols, ou pour des véhicules de location (par exemple, voitures, automobiles, fourgonnettes, camions, bateaux, navires, avions, motos), ou pour des prêts immobiliers, ou pour une assurance (par exemple, une assurance automobile, une assurance habitation, une assurance voyage, une assurance vie, une assurance pour animaux de compagnie), ou pour des prêts d'argent, ou pour des prêts hypothécaires, ou pour l'achat d'un téléphone portable, ou pour des offres haut débit, ou pour l'immobilier, ou pour un logement locatif, ou pour des rencontres.

3. Procédé selon l'une quelconque des revendications précédentes, dans lequel le dispositif client est un ordinateur de bureau, un ordinateur portable, une télévision Internet, un smartphone ou une tablette.

4. Procédé selon l'une quelconque des revendications précédentes, dans lequel le dispositif client est en connexion sans fil (par exemple cellulaire ou Wifi) avec Internet.

5. Procédé selon l'une quelconque des revendications précédentes, dans lequel le serveur BFF interroge le serveur de service de recherche à intervalles réguliers pour demander au serveur de service de recherche d'envoyer des données relatives à la demande de pré-recherche asynchrone qui a été envoyée au serveur de service de recherche.

6. Procédé selon l'une quelconque des revendications précédentes, dans lequel le serveur BFF interroge le serveur de service de recherche à intervalles réguliers pour demander au serveur de service de recherche d'envoyer des données relatives à la demande de pré-recherche asynchrone qui a été envoyée au serveur de service de recherche, jusqu'à ce que tous les résultats de recherche soient reçus et envoyés au dispositif client, y compris le navigateur, et rendus au niveau du navigateur, puis le dispositif client, y compris le navigateur, ferme la connexion persistante.

7. Procédé selon l'une quelconque des revendications précédentes, dans lequel le site Web de recherche vérifie que la demande de recherche ne provient pas d'un robot, et s'il est déterminé que la demande de recherche ne semble pas provenir d'un robot, alors le processus de recherche est poursuivi.

8. Procédé selon l'une quelconque des revendications précédentes, dans lequel une passerelle associée à un serveur de site Web de recherche d'accueil comprenant le site Web de recherche d'accueil sélectionne une région géographique parmi une pluralité de régions géographiques, puis achemine la demande de recherche reçue du navigateur vers un groupe de serveurs dans la région géographique, le groupe de serveurs comprenant le serveur BFF et le serveur de service de recherche, le site Web de service de recherche renvoyant un identifiant associé à la région géographique sélectionnée au navigateur, et le navigateur utilisant l'identifiant associé à la région géographique sélectionnée pour permettre à la passerelle d'acheminer les demandes de recherche reçues du navigateur vers le groupe de serveurs dans la région géographique.

9. Procédé selon la revendication 8, dans lequel le navigateur définit la région géographique sélectionnée à l'aide d'un cookie, par exemple un cookie de session.

10. Procédé selon les revendications 8 ou 9, dans lequel, lorsque la connexion persistante est établie pour interroger le service de recherche, l'en-tête de demande inclut la région obtenue à partir du cookie, par exemple un cookie de session.

11. Procédé selon l'une quelconque des revendications précédentes, dans lequel les premières données de recherche (par exemple, les informations statiques sur un hôtel) sont fournies par le serveur BFF au navigateur s'exécutant sur le dispositif client, et les secondes données de recherche (par exemple, les informations sur les prix associés) ne sont fournies qu'ensuite, si le navigateur s'exécutant sur le dispositif client demande les secondes données de recherche (par exemple, les informations sur les prix associés).

12. Procédé selon l'une quelconque des revendications précédentes, dans lequel un champ est inclus dans la demande de pré-recherche qui est envoyée au service de recherche (par exemple réservation d'hôtel), pour indiquer que cette demande est une demande de recherche asynchrone, y compris pour démarrer le cycle de recherche.

13. Procédé selon l'une quelconque des revendications précédentes, (a) dans lequel le site Web de recherche d'accueil (par exemple, les hôtels) utilise les langages et frameworks JavaScript, TypeScript, Node JavaScript et React ; le serveur BFF (par exemple, les hôtels) utilise les langages et frameworks JavaScript Node, et le service de recherche (par exemple, la réservation d'hôtel) utilise les langages et frameworks Python et aiohttp ; ou
(b) dans lequel, lorsque le navigateur récupère les fichiers CSS et de script à partir du serveur front-end, le navigateur identifie une classe de dispositif client (par exemple, un ordinateur de bureau, un ordinateur portable, une télévision Internet, un smartphone, une tablette) sur le serveur front-end, et le navigateur reçoit en réponse du serveur front-end un ensemble sélectionné correspondant de fichiers CSS et de script, qui correspondent à la classe de dispositif client identifiée par le navigateur.

14. Système comprenant un dispositif client comprenant un programme de navigation et un écran, un site Web de recherche, un serveur back-end pour front-end (BFF) et un serveur de service de recherche, dans lequel
(i) le navigateur est configuré pour s'exécuter sur le dispositif client afin d'envoyer une demande de recherche au site Web d'accueil de recherche, la demande de recherche comprenant des paramètres de recherche ;
(ii) le site Web de recherche d'accueil est configuré pour envoyer une demande de pré-recherche asynchrone au serveur de service de recherche, la demande de pré-recherche asynchrone comprenant les paramètres de recherche, et le serveur de service de recherche est configuré pour lancer un cycle de recherche en utilisant les paramètres de recherche en réponse à la demande de pré-recherche asynchrone ;
(iii) le navigateur est configuré pour recevoir du site Web de recherche des données HTML, y compris des feuilles de style en cascade (CSS) et une balise de script ;
(iv) le navigateur est configuré pour exécuter les CSS et la balise de script afin de télécharger les fichiers CSS et de script à partir d'un serveur front-end ;
(v) le navigateur est configuré pour analyser les fichiers CSS afin de restituer un composant de page Web comprenant un style de page Web ;
(vi) le navigateur est configuré pour exécuter les fichiers de script, dans lequel, en réponse à l'exécution des fichiers de script par le navigateur, le dispositif client comprenant le navigateur est configuré pour établir une connexion persistante au serveur back-end pour front-end (BFF), et pour envoyer les paramètres de recherche au serveur BFF, dans lequel le serveur BFF est configuré pour interroger le serveur de service de recherche à l'aide des paramètres de recherche ;
(vii) le serveur de service de recherche est configuré pour reconnaître que les paramètres de recherche qu'il a reçus dans (vi) correspondent aux paramètres de recherche qu'il a reçus dans (ii), pour utiliser le cycle de recherche initié dans (ii) pour fournir les premiers résultats de recherche du cycle de recherche au serveur BFF, en réponse à l'interrogation du serveur BFF ;
(viii) le serveur BFF est configuré pour envoyer les premiers résultats de recherche au navigateur exécuté sur le dispositif client, et
(ix) le navigateur est configuré pour fournir les premiers résultats de recherche à afficher sur l'écran du dispositif client.

15. Système selon la revendication 14, le système étant configuré pour exécuter un procédé selon l'une quelconque des revendications 1 à 13.
